(19) Europäisches Patentamt
European Patent Office
Office européen des brevets

(11) EP 3 772 942 B1

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **19716901.4**

(22) Anmeldetag: **12.04.2019**

(51) Internationale Patentklassifikation (IPC):
***A01N 25/12** (2006.01)* ***A01N 43/36** (2006.01)*
***A01N 43/90** (2006.01)* ***A01P 7/00** (2006.01)*
***A01N 25/30** (2006.01)*

(52) Gemeinsame Patentklassifikation (CPC):
(C-Sets verfügbar)
**A01N 25/12** (Forts.)

(86) Internationale Anmeldenummer:
**PCT/EP2019/059474**

(87) Internationale Veröffentlichungsnummer:
**WO 2019/197634 (17.10.2019 Gazette 2019/42)**

(54) **FESTSTOFF-FORMULIERUNG INSEKTIZIDER MISCHUNGEN ENTHALTEND 4',4'-DIOXASPIRO-SPIROCYCLISCH SUBSTITUIERTE TETRAMATE**

SOLID FORMULATION OF INSECTICIDAL MIXTURES COMPRISING 4',4'-DIOXASPIRO-SPIROCYCLICALLY SUBSTITUTED TETRAMATES

FORMULATION SOLIDE DE MÉLANGES INSECTICIDES CONTENANT TÉTRAMATES SPIROCYCLIQUES À SUBSTITUTION 4',4'-DIOXASPIRO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **13.04.2018 EP 18167264**

(43) Veröffentlichungstag der Anmeldung:
**17.02.2021 Patentblatt 2021/07**

(73) Patentinhaber: **Bayer Aktiengesellschaft**
**51373 Leverkusen (DE)**

(72) Erfinder:
- **EGGER, Holger**
  **50825 Köln (DE)**
- **FISCHER, Reiner**
  **40789 Monheim (DE)**
- **ZUMSANDE, Laura**
  **51371 Leverkusen (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**EP-A1- 2 103 615** **EP-A2- 1 377 163**
**WO-A1-2009/086739** **WO-A1-2013/159731**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 772 942 B1

(52) Gemeinsame Patentklassifikation (CPC): (Forts.)

C-Sets
**A01N 25/12, A01N 25/30, A01N 43/36, A01N 43/90;**
**A01N 25/12, A01N 43/36, A01N 43/90**

## Beschreibung

Die Erfindung betrifft Feststoff-Formulierungen (insbesondere Wasser-lösliche Granulate (SG)) von insektizid wirksamen Tetramsäurederivaten, ein Verfahren zu deren Herstellung sowie ihre Verwendung zur Applikation der enthaltenen Wirkstoffe, insbesondere für Drip & Drench Applikationen.

SL-Formulierungen (Lösliche Konzentrate) von Tetramsäurederivaten sind aus dem Stand der Technik bekannt, z.B. aus der WO 2009/115262, wobei diese jedoch den Nachteil aufweisen, daß die Konzentration des Wirkstoffs in der Lösung oft nur gering ist, so daß für Transport, Verarbeitung und Lagerung große Volumina gebraucht werden. Darüberhinaus besteht bei hochkonzentrierten Lösungen die Gefahr der Übersättigung, so dass es zu Präzipitation von Inhaltsstoffen kommen kann und so die Lagerstabilität des Produkts beeinflusst.

Ferner sind SC Formulierungen (Suspensionskonzentrate) dieser Verbindungen bekannt, die jedoch oft eine schlechte oder nur sehr langsame Löslichkeit der Wirkstoffe (ai) und Inhaltsstoffe aufweisen, was ebenfalls für WG-Formulierungen (wasserdispergierbare Granulate) gilt, die darüber hinaus unlösliche Füllstoffe enthalten.

Die WO2013/159731A1, EP1377163A2 und die WO2009/086739A1 offenbaren wasserlösliche Granulate, wobei WO2013/159731A1 auch Lignin-Sulfitablaugen als Dispergiermittel nennt. Diese Dokumente beschäftigen sich jedoch nicht mit Tetramaten als Wirkstoff.

Bei der Anwendung in Spritzgeräten und Bewässerungssystem, die in der Regel Schläuche mit geringem Durchmesser und Düsen beinhalten, kommt es insbesondere bei den WGs, aber auch bei den anderen Formuliertypen, die wasserunlösliche Stoffe beinhalten, häufig zur Verstopfung dieser Schläuche und Düsen durch ungelöstes oder ausgefallenes Material, sei es Wirkstoff oder Hilfsstoff.

Die Aufgabe der vorliegenden Erfindung war es daher schnelllösliche, hochkonzentrierte Formulierungen der erfindungsgemäßen Tetramsäurederivate bereitzustellen, aus denen sich Rückstandsfrei eine gebrauchsfertige Formulierung herstellen läßt. Ferner sollte die Salzlast des Bodens vermindert werden und optional die weiteren Bestandteile der Formulierung als Dünger / Nährstoff wirken.

Gegenstand der Erfindung sind deshalb insektizide Zusammensetzungen in Form wasserlöslicher Granulate (SG) enthaltend:

a. als Komponente a Tetramsäurederivaten der Formel (I)

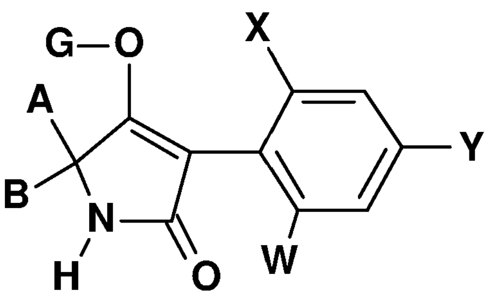

(I)

in welcher

W und Y unabhängig voneinander für Wasserstoff, C1-C4-Alkyl, Chlor, Brom, Jod oder Fluor stehen,

X für C1-C4-Alkyl, C1-C4-Alkoxy, Chlor, Brom oder Jod steht,

A, Bund das Kohlenstoffatom, an das sie gebunden sind, für C3-C6-Cycloalkyl stehen, welches durch eine gegebenenfalls durch C1-C4-Alkyl oder $C_1$-$C_4$-Alkoxy-$C_1$-$C_2$-alkyl-substituierte Alkylendioxyl-Gruppe substituiert ist, die mit dem Kohlenstoffatom, an das sie gebunden ist, ein 5-Ring- oder 6-Ringketal bildet,

G für Wasserstoff (a) oder für eine der Gruppen

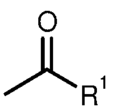 (b), 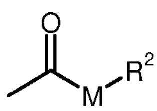 (c),

E (d) stehen, in welchen

E für ein Metallion oder ein Ammoniumion steht,

M für Sauerstoff oder Schwefel steht,

R1 für geradkettigtes oder verzweigtes C1-C6-Alkyl steht,

R2 für geradkettigtes oder verzweigtes C1-C6-Alkyl steht.

b. mindestens eine Base, vorzugsweise eine anorganische Base, weiter bevorzugt ein AlkalimetallHydroxid (Komponente b),

c. mindestens ein Dispergiermittel, ausgewählt aus der Gruppe der Ligninsulfonate und deren Salzen,

d. optional mindestens ein Netzmittel,

e. optional mindestens einen wasserlöslicher Füllstoff, und

f. optional weitere wasserlösliche oder flüssige Wirkstoffe und Adjuvantien, wobei Komponenten a - f enthalten sind in

a) 50-90 Gew.-%
b) 2-40 Gew.-%
c) 1-40 Gew.-%
d) 0-5 Gew.-%
e) 0-25 Gew.-% und
f) 0-10 Gew.-%,

dadurch gekennzeichnet, dass das molare Verhältnis von Wirkstoff zu Base (Komponente (a) zu (b)) im Bereich von 0,7 : 1,0 bis 1,0: 0,7, ist.

Das Dispergiermittel ist vorzugsweise ein basisches Dispergiermittel, d.h. vorzugsweise mit einem pH >= 8, weiter bevorzugt >=10, in wässriger Lösung (gemessen mit Glaselektrode in 15-%iger Lösung bei 25°C).

Hervorgehoben bevorzugt einsetzbar in den oben genannten Zusammensetzungen sind Tetramsäurederivate der oben genannten Formel (I) mit G = Wasserstoff (a).

Ebenfalls hervorgehoben bevorzugt einsetzbar sind Tetramsäurederivate der oben genannten Formel (I) mit G = E (d).

In einer bevorzugten Ausführungsform ist der Gegenstand der Erfindung eine insektizide Zusammensetzung in Form wasserlöslicher Granulate (SG) enthaltend:

a. Verbindungen der Formel (I)

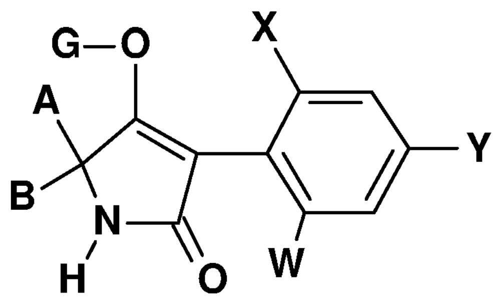

wobei die Verbindungen der Formel (I) folgende Definitionen haben:

W steht für Methyl,
X steht für Chlor oder Methyl,
Y steht für Chlor, Brom oder Methyl,
A, B und das Kohlenstoffatom, an das sie gebunden sind, stehen für gesättigtes C6-Cycloalkyl, welches mit einer Alkylendioxyl-Gruppe substituiert ist, die mit dem Kohlenstoffatom, an das sie gebunden ist, ein 5-Ring- oder 6-Ringketal bildet,

G steht für Wasserstoff (a) oder für eine der Gruppen E (d),

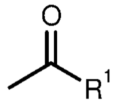 (b), 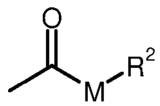 (c),

in welchen

M für Sauerstoff steht,

E für ein Metallionenäquivalent oder ein Ammoniumion steht,

$R^1$ für geradkettigtes oder verzweigtes $C_1$-$C_4$-Alkyl steht, (I)

$R^2$ für geradkettigtes oder verzweigtes $C_1$-$C_4$-Alkyl steht.

b. mindestens eine Base (Komponente b) ausgewählt aus der Gruppe umfassend LiOH, KOH und NaOH,

c. mindestens ein Dispergiermittel ausgewählt aus der Gruppe der Ligninsulfonate und deren Salzen, bestehend aus Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 und Borresperse CA der Fa. Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O und POLYFON T der Fa. Ingevity; AGRINOL DN 19 und Agrinol C12 der Fa. Tembec.

d. mindestens ein Netzmittel, ausgewählt aus der Gruppe bestehend aus den Natriumsalzen alkylierter Naphthalinsulfonate wie z.B. ®Morwet EFW, und den Natriumsalzen der Dioctylsulfobernsteinsäure wie z.B. ®Aerosol OTB, und Blockpolymerisat von Propylenoxid und Ethylenoxid auf Ethylendiamin, wie z.B. ®Synperonic T 905

e. optional mindestens einen wasserlöslicher Füllstoff, und

f. optional weitere wasserlösliche oder flüssige Wirkstoffe und Adjuvantien.

In einer weiter bevorzugten Ausführungsform ist der Gegenstand der Erfindung eine insektizide Zusammensetzung in Form wasserlöslicher Granulate (SG) enthaltend:

a. Verbindung der Formel (I) ausgewählt aus folgenden Verbindungen

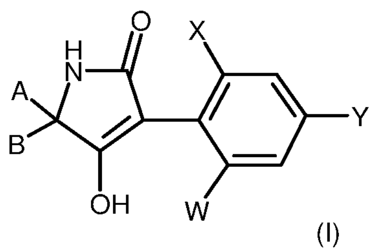

(I)

| W | X | Y | A | B |
|---|---|---|---|---|
| $CH_3$ | $CH_3$ | $CH_3$ | 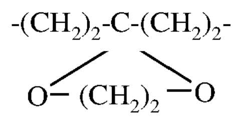 | |
| $CH_3$ | $CH_3$ | Cl | 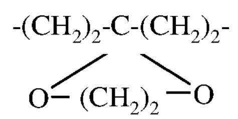 | |
| $CH_3$ | $CH_3$ | Br | 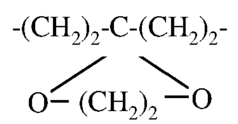 | |

(fortgesetzt)

| W | X | Y | A | B |
|---|---|---|---|---|
| $CH_3$ | $CH_3$ | $CH_3$ | | 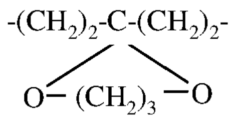 |
| $CH_3$ | $CH_3$ | Cl | | 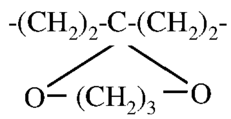 |
| $CH_3$ | $CH_3$ | Br | | 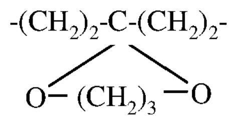 |

I)

b. mindestens eine Base (Komponente b) ausgewählt aus der Gruppe umfassend KOH und NaOH,

c. mindestens ein Dispergiermittel ausgewählt aus der Gruppe der Ligninsulfonate und deren Salzen, bestehend aus REAX 88B, Reax 100M

d. mindestens ein Netzmittel, ausgewählt aus der Gruppe bestehend aus den Natriumsalzen alkylierter Naphthalinsulfonate wie z.B. ®Morwet EFW, und den Natriumsalzen der Dioctylsulfobernsteinsäure wie z.B. ®Aerosol OTB,

e. mindestens einen wasserlöslicher Füllstoff, ausgewählt aus der Gruppe, die leicht lösliche anorganische Salze, Zucker und Harnstoffderivate umfaßt, vorzugsweise ausgewählt aus der Gruppe, die Kaliumsulfat, Phosphorsäuresalze der Form $M_3PO_4$, wobei M vorzugsweise ein Ammonium- oder Alkalimetall-kation, weiter bevorzugt Ammonium, Na oder K ist; Lactose, Maltodextrin und Harnstoff umfaßt,

f. optional weitere wasserlösliche oder flüssige Wirkstoffe und Adjuvantien.

In einer besonders bevorzugten Ausführungsform ist der Gegenstand der Erfindung eine insektizide Zusammensetzung in Form wasserlöslicher Granulate (SG) enthaltend:

a. Verbindung mit der Formel (I-2) mit folgender Struktur:

(I)

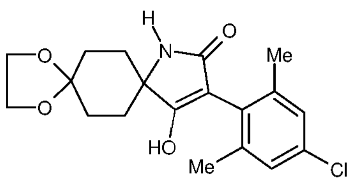

(I-2)

b. KOH als Base (Komponente b),

c. REAX 88B (CAS-Nr 68512-34-5) als basisches Dispergiermittel aus der Gruppe der Ligninsulfonate,

d. ein Netzmittel, ausgewählt aus der Gruppe bestehend aus den Natriumsalzen alkylierter Naphthalinsulfonate, vorzugsweise ®Morwet EFW (CAS-Nr 26264-58-4),

e. mindestens einen wasserlöslicher Füllstoff, ausgewählt aus der Gruppe, die Zucker und leicht lösliche organische Salze umfaßt, vorzugsweise Kaliumsulfat, Kaliumphosphat, Lactose und Maltodextrin, besonders bevorzugt Lactose,

f. optional weitere wasserlösliche oder flüssige Wirkstoffe und Adjuvantien.

Hervorgehoben bevorzugt einsetzbar in den oben genannten Zusammensetzungen sind Tetramsäurederivate der oben genannten Formel (I) mit G = Wasserstoff (a).

Ebenfalls hervorgehoben bevorzugt einsetzbar sind Tetramsäurederivate der oben genannten Formel (I) mit G =

E (d).

Die Verbindung I-2 wird bevorzugt in Form ihrer thermodynamisch stabilsten polymorphen Struktur eingesetzt. Diese Kristallstruktur sowie weitere physikalische Daten wurden wie folgt bestimmt:

Probenvorbereitung:

Die Verbindung I-2 ($C_{19}H_{22}ClNO_4$ / MW = 363.84 g/mol) wurde aus Methanol kristallisiert und bei Raumtemperatur getrocknet, wobei Modifikation A erhalten wurde.

Die Modifikation A von I-2 kann durch Röntgen-Pulver-Diffraktometrie auf Basis der entsprechenden Beugungsdiagramme charakterisiert werden, die bei 25°C und mit Cu-Kα 1 Strahlung (1.5406 Å) aufgenommen wurden (FIGUR 1).

Die Modifikation A gemäß der vorliegenden Erfindung zeigt mindestens 3, bevorzugt mindestens 5, weiter bevorzugt mindestens 7, noch weiter bevorzugt mindestens 10, und am meisten bevorzugt alle Reflexionen, wie sie in FIGUR 1 wiedergegeben werden:

Die Modifiaktion A gemäß der vorliegenden Erfindung is weiterhin durch das Röntgenbeugungsdiagramm dargestellt in Figur I charakterisiert.

Kristallographische Untersuchungen an Einkristallen der Modifikation A zeigten, daß die Kristallstruktur monoklin ist. Die Elementarzelle hat die Raumgruppe $P2_1/c$.

**Tabelle 2:** Kristallographische Eigenschaften der Modifikation A

| Parameter | *Modifikation A* |
|---|---|
| Kristallsystem | Monoklin |
| Raumgruppe | $P2_1/c$ |
| a in Å | 11.66544(14) |
| b in Å | 9.50603(10) |
| c in Å | 16.66907(19) |
| α | 90 |
| β | 110.2045(13) |
| γ | 90 |
| Z | 4 |
| Dichte (berechnet) | 1.393 g/cm$^3$ |
| a, b, c = Länge der Seiten der Elementarzelle<br>α, β, γ= Winkel der Elementarzelle of the unit cell<br>Z = Anzahl der Moleküle in der Elementarzelle | |

**Tabellen 2a/b:** Kristallographische Daten / Reflexe[°2Theta] der Modifikation A

| 2a | 2b |
|---|---|
| [°2Theta] | Reflexe [°2Theta] |
| Modifikation A | Modifikation A |
| 11,3 | 8,0 |
| 14,6 | 10,8 |
| 16,0 | 11,3 |
| 20,1 | 12,2 |
| 21,7 | 14,6 |
| 22,7 | 16,0 |
| 23,1 | 17,6 |
| 24,5 | 18,4 |
| 28,2 | 19,4 |

(fortgesetzt)

| 2a | 2b |
|---|---|
| [°2Theta] | Reflexe [°2Theta] |
| Modifikation A | Modifikation A |
| 29,0 | 20,1 |
| | 21,7 |
| | 22,7 |
| | 23,1 |
| | 23,8 |
| | 24,5 |
| | 25,9 |
| | 26,4 |
| | 28,2 |
| | 29,0 |
| | 29,4 |
| | 30,1 |
| | 30,6 |
| | 32,2 |
| | 36,2 |
| | 37,4 |
| | 38,2 |
| | 39,1 |

Die polymorphe Form der Modifikation A von I-1 kann durch IR-Spektroskopie anhand des entsprechenden Spektrums bestimmt werden, das bei 25°C unter Verwendung eines Diamant-ATR Gerätes bei einer Auflösung von 4 $cm^{-1}$ (FIGUR 2) aufgenommen wurde. Die Modifikation A der vorliegenden Erfindung zeigt mindestens 3, bevorzugt mindestens 5, weiter bevorzugt mindestens 7, und besonders bevorzugt alle Banden, wie sie in Figur 2 zu sehen und in Tabelle 2c beschrieben sind.

Tabelle 2c) IR-Banden [$cm^{-1}$]

| Bandenmaxima [$cm^{-1}$] | Bandenmaxima [$cm^{-1}$] |
|---|---|
| Modifikation A | |
| 3378 | 1133 |
| 2969 | 1109 |
| 2955 | 1088 |
| 2943 | 1045 |
| 2924 | 1036 |
| 2876 | 1027 |
| 2858 | 1015 |
| 2326 | 997 |
| 1637 | 980 |
| 1592 | 965 |
| 1575 | 946 |
| 1564 | 936 |
| 1470 | 903 |
| 1444 | 869 |

(fortgesetzt)

| Bandenmaxima [$cm^{-1}$] | Bandenmaxima [$cm^{-1}$] |
|---|---|
| Modifikation A | |
| 1438 | 856 |
| 1428 | 821 |
| 1394 | 783 |
| 1372 | 769 |
| 1344 | 748 |
| 1325 | 704 |
| 1317 | 691 |
| 1297 | 659 |
| 1272 | 639 |
| 1247 | 625 |
| 1194 | 573 |
| 1157 | 563 |
| | 553 |

Zusätzlich zur oben beschriebenen Modifikation A kann die Verbindung I-2 in weiteren polymorphen Formen wie auch pseudopolymorphen Formen (Hydrate, Solvate, etc) vorliegen.

Erfindungsgemäß ist das Äquivalent-Verhältnis von Wirkstoff zu Base (Komponente (a) zu (b)) im Bereich von 0,7 : 1,0 bis 1,0 : 0,7, weiter bevorzugt im Bereich von 1,0 : 1,0 bis 1,0 : 0,8, und besonders bevorzugt im Bereich von 1,0 : 1,0 bis 1,0 : 0,9.

In der vorliegenden Erfindung können in Formeln, z.B. Formel (I), gegebenenfalls substituierte Reste, sofern nichts anderes angegeben ist, einfach oder mehrfach substituiert sein, wobei bei Mehrfachsubstitutionen die Substituenten gleich oder verschieden sein können.

Ferner sind in den in der vorliegenden Erfindung genannten Vorzugsbereichen die verschiedenen Vorzugsebenen so zu verstehen, daß diese permutierend miteinander kombiniert werden können, in jedem Fall sind aber gleiche Vorzugsebenen und insbesondere die jeweils am meisten bevorzugte Ausführungsform / Vorzugsebene miteinander zu kombinieren und als solche Kombination auch offenbart.

Ebenso sollen Zusammensetzungen wie oben beschrieben als offenbart angesehen werden, die nur aus den essentiellen Komponenten (nicht optionale Komponenten) bestehen.

Hinsichtlich der Komponente a ist es selbstverständlich möglich Zusammensetzungen mit einem geringerem Wirkstoffgehalt als 50 Gew.-% herzustellen, wobei jedoch ein hoher Wirkstoffgehalt für die Anwendung bevorzugt wird (Transportvolumen, Handhabung, Ökonomie). Weiterhin ist dem Fachmann geläufig, daß der gewichtsprozentuale Anteil der Base mit der Art der verwendeten Base abhängig von deren Molekulargewicht variieren kann.

Feststoffanteile sind - wenn nicht anders angegeben - als Gewichtsprozente zu verstehen, wobei sich die Feststoffanteile der Zusammensetzungen zu 100 addieren. Ferner geben die Anteile im Falle von zugesetzten Lösungen (z.B. Base) die Anteile der Lösungen an, so daß z.B. der Anteil an reiner KOH bei einer 50%igen Lösung der Hälfte der gegebenen Prozentzahl entspricht.

Der Anteil des Wirkstoffs (Komponente a / Verbindungen der Formel I / I-2) in den erfindungsgemäßen Zusammensetzungen beträgt

50 - 90 Gew.-%,

weiter bevorzugt 55- 85 Gew.-%, und

besonders bevorzugt 60 - 80 Gew.-%.

Der Anteil der Base (Komponente b 50% ige Aufschlämmung in Wasser) in den erfindungsgemäßen Zusammensetzungen beträgt

2 - 40 Gew.-%, (entspricht 1 - 20 Gew.-% reiner Base)

weiter bevorzugt 10 - 30 Gew.-%, (entspricht 5 - 15 Gew.-% reiner Base) und

besonders bevorzugt 15 - 25 Gew.-% (entspricht 7.5 - 12.5 Gew.-% reiner Base) betragen.

Der Anteil des Dispergiermittels (Komponente c) in den erfindungsgemäßen Zusammensetzungen beträgt

1 - 40 Gew.-%,

weiter bevorzugt 3 - 15 Gew.-%, und

besonders bevorzugt 8 - 12 Gew.-% betragen.

Der Anteil des Netzmittel (Komponente d) in den erfindungsgemäßen Zusammensetzungen beträgt

0 - 5 Gew.-%,

weiter bevorzugt 1 - 3 Gew.-%, und

besonders bevorzugt 1,5 - 2,5 Gew.-% betragen.

Der Anteil des wasserlöslichen Füllstoffs (Komponente e) in den Zusammensetzungen Formulierungen beträgt

0 - 25 Gew.-%,

weiter bevorzugt 0 - 20 Gew.-%, und

besonders bevorzugt 0 - 18 Gew.-% betragen.

In einer alternativen Ausführungsform beträgt der Anteil des wasserlöslichen Füllstoffs (Komponente e) in den Zusammensetzungen Formulierungen, wobei die übrigen Bestandteile in den Mengen wie in der vorliegenden Anmeldung beschrieben vorliegen.vorzugsweise 1 - 25 Gew.-%,

weiter bevorzugt 5 - 18 Gew.-%, und

besonders bevorzugt 12 - 18 Gew.-% betragen.

Der Anteil der weiteren wasserlöslichen oder flüssigen Wirkstoffe und Adjuvantien (Komponente f) - sofern enthalten - in den erfindungsgemäßen Zusammensetzungen beträgt (Entschäumer und Schwefelsäure als pH-Adjuster)

0 - 10 Gew.-%,

weiter bevorzugt 0,1 - 8 Gew.-%, und

besonders bevorzugt 0,1 - 5 Gew.-% betragen.

In den folgenden genannten Ausführungsformen ist der Anteil der Base immer bezogen auf die 50%ige Aufschlämmung in Wasser, d.h. der Anteil reiner Base ist halb so groß (vgl. oben).Desweiteren sind die in der vorliegenden Erfindung gegebenen Zusammensetzungen immer auf Zusammensetzungen in Form wasserlöslicher Granulate (SG) gerichtet, sofern nicht ausdrücklich anders angegeben.

Eine bevorzugte Ausführungsform der Erfindung sind Zusammensetzungen enthaltend Komponenten

a) 55-85 Gew.-%
b) 10-30 Gew.-%
c) 3-15 Gew.-%
d) 1-3 Gew.-%
e) 0-25 Gew.-%.
f) 0-10 Gew.-%

Eine weiter bevorzugte Ausführungsform der Erfindung sind Zusammensetzungen enthaltend Komponenten

a) 55-80 Gew.-%
b) 10-30 Gew.-%
c) 3-15 Gew.-%
d) 1-3 Gew.-%
e) 0-20 Gew.-%.
f) 0,1-8 Gew.-%

Eine noch weiter bevorzugte Ausführungsform der Erfindung sind Zusammensetzungen enthaltend Komponenten

a) 60-80 Gew.-%
b) 15-25 Gew.-%
c) 8-12 Gew.-%
d) 1,5-2,5 Gew.-%
e) 0-18 Gew.-%
f) 0,1 -5 Gew.-%

Eine bevorzugte alternative Ausführungsform der Erfindung sind Zusammensetzungen enthaltend Komponenten

a) 60-80 Gew.-%
b) 15-25 Gew.-%
c) 8-12 Gew.-%
d) 1,5-2,5 Gew.-%
e) 1-25 Gew.-%
f) 0,1-8 Gew-%.

Eine weitere hervorzuhebende Ausführungsform der Erfindung sind solche Zusammensetzungen, bei denen REAX 88b® als Dispergiermittel und Lactose als Komponente e) eingesetzt werden.
Eine weitere hervorzuhebende Ausführungsform der Erfindung sind solche Zusammensetzungen, bei denen REAX 88b® als Dispergiermittel und Kaliumsulfat als Komponente e) eingesetzt werden.
Eine weitere hervorzuhebende Ausführungsform der Erfindung sind solche Zusammensetzungen, bei denen REAX 88b® als Dispergiermittel und Kaliumphosphat als Komponente e) eingesetzt werden.
Eine weitere hervorzuhebende Ausführungsform der Erfindung sind solche Zusammensetzungen, bei denen REAX 88b® als Dispergiermittel und Morwet EFW als Komponente d) eingesetzt werden.
Eine weitere hervorzuhebende Ausführungsform der Erfindung sind solche Zusammensetzungen, bei denen REAX 88b® als Dispergiermittel und Kaliumphosphat zusammen mit Lactose als Komponente e) eingesetzt werden.
Eine weitere hervorzuhebende Ausführungsform der Erfindung sind solche Zusammensetzungen, bei denen REAX 88b® als Dispergiermittel und Silcolapse 726R ® als Antischaummittel eingesetzt werden.
Eine weitere hervorzuhebende Ausführungsform der Erfindung sind solche Zusammensetzungen, bei denen REAX 88b® als Dispergiermittel und Schwefelsäure zur Einstellung des pH-Wertes eingesetzt werden.
Eine weitere hervorzuhebende Ausführungsform der Erfindung sind solche Zusammensetzungen, bei denen Silcolapse 726R ® als Antischaummittel und Schwefelsäure zur Einstellung des pH-Wertes eingesetzt werden.
Eine weitere hervorzuhebende Ausführungsform der Erfindung sind solche Zusammensetzungen, bei denen REAX 88b® als Dispergiermittel und Silcolapse 726R ® als Antischaummittel und Schwefelsäure zur Einstellung des pH-Wertes eingesetzt werden.
Geeignete Wirkstoffe gemäß Komponente a) sind solche, wie sie in den oben genannten Ausführungsformen gemäß Formel 1 gezeigt werden.
Geeignete Basen (b) im Sinne der vorliegenden Erfindung sind anorganische Basen, vorzugsweise Metall-Hydroxid-Basen, weiter bevorzugt Alkalimetall-Hydroxide, noch weiter bevorzugt Alkalimetallhydroxide ausgewählt aus der Gruppe, die LiOH, NaOH und KOH umfaßt und besonders bevorzugt KOH.
Geeignete Dispergiermittel (c) im Sinne der vorliegenden Erfindung sind Dispergiermittel ausgewählt aus der Gruppe der Ligninsulfonate und deren Salzen, vorzugsweise ausgewählt aus der Gruppe der Ligninsulfonate und deren Salzen, bestehend aus Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 und Borresperse CA der Fa. Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O und POLYFON T der Fa. Ingevity; AGRINOL DN 19 und Agrinol C12 der Fa. Tembec, weiter bevorzugt aus der Gruppe, die REAX 88A und REAX 88B

umfaßt und besonders bevorzugt REAX 88B.

Geeignete Netzmittel (d) im Sinne der vorliegenden Erfindung sind Netzmittel ausgewählt aus der Gruppe bestehend aus den Natriumsalzen alkylierter Naphthalinsulfonate wie z.B. ®Morwet EFW, und den Natriumsalzen der Dioctylsulfobernsteinsäure wie z.B. ®Aerosol OTB, und Blockpolymerisat von Propylenoxid und Ethylenoxid auf Ethylendiamin, wie z.B. ®Synperonic T 905, bevorzugt ausgewählt aus der Gruppe bestehend aus den Natriumsalzen alkylierter Naphthalinsulfonate wie z.B. ®Morwet EFW, und den Natriumsalzen der Dioctylsulfobernsteinsäure wie z.B. ®Aerosol OTB, und besonders bevorzugt bestehend aus den Natriumsalzen alkylierter Naphthalinsulfonate, vorzugsweise ®Morwet EFW.

Geeignete wasserlösliche Füllstoffe (e) im Sinne der vorliegenden Erfindung sind Füllstoffe ausgewählt aus der Gruppe, die leicht lösliche anorganische Salze, Zucker und Harnstoffderivate umfaßt, beispielsweise Lactose, Maltodextrin, Kaliumsulfat, Phosphorsäuresalze der Form $M_3PO_4$, wobei M vorzugsweise ein Ammonium oder Alkalimetallkation, weiter bevorzugt Ammonium, Na oder K ist, und Harnstoff. Weiter bevorzugt sind die Füllstoffe ausgewählt aus der Gruppe, die Zucker und Phosphorsäuresalze der Form $M_3PO_4$, wobei M vorzugsweise ein Ammonium oder Alkalimetallkation, weiter bevorzugt Ammonium, Na oder K ist, umfaßt, vorzugsweise Kaliumsulfat, Lactose und Maltodextrin, besonders bevorzugt Kaliumsulfat und Lactose.

Die erfindungsgemäßen Zusammensetzungen enthalten gegebenenfalls weitere Formulierhilfsmittel (f), z.B. gegebenenfalls Stoffe aus den Gruppen der Emulgiermittel, der anionischen oder nicht-ionischen Netzmittele, der schaumhemmenden Mittel beispielsweise auf Silikon-Basis, der Konservierungsmittel, der Antioxydantien, der Farbstoffe, Säuren oder Laugen zur Einstellung des pH-Wertes und/oder der inerten Füllmaterialien.

Als weitere geeignete Netzmittel (Komponente e-3) können feste Netzmittele, anionische und/oder zwitterionische Netzmittele, Sulfonate (Sulfosuccinate), Sulfate, Phosphonate, Phosphate und Carboxylate, aber auch alkalische Netzmittele (z.B. ®Synperonic T-Typen) verwendet werden. Sie können ausgewählt werden aus der Gruppe fester, d.h. bei Raumtemperatur nicht flüssiger Netzmittel, mit z.B. wachsartiger, amorpher oder kristalliner Beschaffenheit, z.B. aus der Gruppe der Reaktionsprodukte von Alkylenoxiden mit Alkylenpolyaminen, der Naphthalinsulfonsäuren und der Gruppe der Sulfobernsteinsäure-Derivate sowie den Salzen dieser Gruppen, die einerseits Mono- und Di-Ester der Sulfobernsteinsäure sowie deren Salze (Sulfosuccinate) enthalten können und andererseits alkylierte Naphthalinsulfonsäuren und deren Salze enthalten können.

Typische Vertreter geeigneter Netzmittel sind unter anderem ®Synperonic T-Typen (Blockpolymerisaten von Propylenoxid und Ethylenoxid auf Ethylendiamin), ®Nekal BX (alkylierte Naphthalinsulfonate), ®Galoryl MT 804 (alkylierte Naphthalinsulfonate).

Als schaumhemmende Stoffe kommen alle üblicherweise für diesen Zweck in agrochemischen Mitteln einsetzbaren Substanzen in Betracht. Bevorzugt sind Silikonöle und Magnesiumstearat. Besonders bevorzugt sind nichtionische wässrige Emulsionen aus Polydimethylsiloxan-Basis. Als Konservierungsmittel kommen alle üblicherweise für diesen Zweck in agrochemischen Mitteln dieses Typs einsetzbaren Substanzen in Frage. Als Beispiele genannt seien Preventol® (Fa. Lanxess) und Proxel®.

Als Antioxidantien kommen alle üblicherweise für diesen Zweck in agrochemischen Mitteln einsetzbaren Substanzen in Betracht. Bevorzugt ist Butylhydroxytoluol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als pH-Adjuster kommen alle gängigen Säuren und Basen, wie beispielsweise Salzsäure, Schwefelsäure, Zitronensäure oder Natronlauge und Kalilauge in Frage.

Besonders bevorzugt als pH-Adjuster ist Schwefelsäure.

Die Aufwandmenge an den erfindungsgemäßen Formulierungen kann innerhalb eines größeren Bereiches variiert werden. Sie richtet sich nach den jeweiligen Wirkstoffen und nach deren Gehalt in den Zusammensetzungen.

Mit Hilfe der erfindungsgemäßen Zusammensetzungen lassen sich die insektiziden Wirkstoffmischungen in besonders vorteilhafter Weise auf Pflanzen und/oder deren Lebensraum ausbringen.

Mit den erfindungsgemäßen Zusammensetzungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Bevorzugt werden die Verbindungen der Formel (I) nach Angießen (Drench) oder durch Drip-Applikation gegen tierische Schädlinge aus den folgenden Schädlingsfamilien eingesetzt:

Bevorzugt sind aus der Familie der Blasenläuse (Pemphigidae): Eriosoma spp., Pemphigus spp., in Kulturen wie z.B. Zitrus, Kernobst, Steinobst, Blattgemüse, Wurzel- und Knollengemüse und Zierpflanzen.

Bevorzugt sind aus der Familie der Wurzelläuse (Phylloxeridae): Phylloxera spp. in Wein, Nüssen, Zitrus.

Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Pistazien, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia tabaci, Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle, Soja und tropischen Kulturen.

Außerdem bevorzugt sind aus der Familie der Röhrenläuse (Aphidae):
Myzus spp. in Tabak, Steinobst, Beerenfrüchten, Fruchtgemüse, Blattgemüse, Knollen- und Wurzelgemüse, Melonen, Kartoffeln, Zierpflanzen, Gewürze,

Acyrthosiphon onobrychis in Gemüse,

Aphis spp. in Tabak, Zitrus, Kernobst, Steinobst, Melonen, Erdbeeren, Beerenfrüchten, Fruchtgemüse, Blattgemüse, Knollen-, Stangen- und Wurzelgemüse, Zierpflanzen, Kartoffeln, Kürbisse, Gewürze,

Rhodobium porosum in Erdbeeren,

Nasonovia ribisnigri in Blattgemüse,

Macrosiphum spp. in Zierpflanzen, Kartoffeln, Blatt-, und Fruchtgemüse, Erdbeeren,

Phorodon humuli in Hopfen,

Brevicoryne brassicae in Blattgemüse,

Toxoptera spp.in Zitrus, Steinobst, Mandeln, Nüssen, Gewürzen,

Aulacorthum spp. in Zitrus, Kartoffeln, Frucht- und Blattgemüse,

Anuraphis cardui in Gemüse,

Brachycaudus helycrisii in Sonnenblumen,

Acyrthosiphon onobrychis in Gemüse.

Bevorzugt sind ebenfalls aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. und Thrips spp., in Kulturen wie z.B. Obst, Baumwolle, Wein, Tee, Nüsse, tropischen Kulturen, Zierpflanzen, Coniferen, Tabak, Gewürze, Gemüse, Beerenfrüchte, Melonen, Zitrus und Kartoffeln.

Bevorzugt sind außerdem aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Kartoffeln, Nüsse, Zierpflanzen.

Bevorzugt sind aus den Familien der Zwergzikaden (Cicadellidae) und Homzikaden (Delphacidae); Circulifer

spp., Dalbus spp., Empoasca spp., Ervthroneura spp., Homalodisca spp., Iodioscopus spp., Laodelphax spp., Nephotettix spp., Nilaparvata spp., Oncometopia spp., Sogatella spp., in Kulturen wie z.B. Zitrus, Obst, Wein, Kartoffeln, Gemüse, Zierpflanzen, Coniferen, Melonen, Beerenfrüchte, Tee, Nüssen, Reis und tropischen Kulturen.

Bevorzugt sind aus der Familie der Miniermotten (Gracillariidae):
Caloptilia spp., Gracillaria spp., Lithocolletis spp., Leucoptera spp., Phtorimaea spp., Phyllocnistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp., Prodiplosis spp., Thecodiplosis spp., Sitodiplosis spp., Haplodiplosis spp. in Kulturen wie Zitrus, Kernobst, Steinobst, Gemüse, Kartoffeln, Gewürze, Beerenobst, Koniferen, Hopfen.

Ebenso bevorzugt sind aus der Familie der Fruchtfliegen (Tephritidae):
Anastrepha spp., Ceratitis spp., Dacus spp., Rhagoletis spp. in Kulturen wie Gemüse, Beerenfrüchte, Melonen, Kern- und Steinobst, Zierpflanzen, Kartoffeln, Wein, tropischen Kulturen, Zitrus, Oliven.

Außerdem bevorzugt sind Milben aus den Familien der Spinnmilben (Tetranychidae) und der Gallmilben (Eriophydae):
Tetranychus spp., Panonychus spp., Aculops spp. in Kulturen wie Gemüse, Kartoffeln, Zierpflanzen, Zitrus, Wein, Koniferen.

Die erfindungsgemäße Behandlung der Pflanzen und Pflanzenteile mit den erfindungsgemäßen Zusammensetzungen erfolgt direkt oder durch Einwirkung auf deren Umgebung, Lebensraum oder Lagerraum nach den üblichen Behandlungsmethoden, z.B. durch Angießen (Drench), Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die Applikation des Wirkstoffs erfolgt vorzugsweise durch Angiessen auf den Boden. Alternativ erfolgt die Applikation des Wirkstoffes durch Tröpfchenapplikation (Drip).

Vorzugsweise ist die zu behandelnde Pflanze ausgewählt aus der Gruppe bestehend aus Baumwolle, Sojabohne, Tabak, Gemüsen, Gewürzen, Zierpflanzen, Koniferen, Zitruspflanzen, Obst, tropischen Kulturen, Nüssen und Wein.

Vorzugsweise wirkt die erfindungsgemäße Zusammensetzung gegen Schädlinge aus den Familien der Blasenläuse, Wurzelläuse, Blattflöhe, Napfschildläuse, Deckelschildläuse, Röhrenschildläuse, Schmierläuse, Wollläuse, Mottenschildläuse, Röhrenläuse, Thripse, Zwergzikaden, Hornzikaden, Minierfliegen, Gallmücken, Fruchtfliegen, Miniermotten, Spinnmilben, Gallmilben.

Es wurde außerdem gefunden, dass sich die erfindungsgemäßen Zusammensetzungen herstellen lassen, durch ein Verfahren mit den Schritten:

1) Mischen des Wirkstoffs (a) mit der Base (b) und dem Dispergiermittel (c) sowie ggf. weiteren Bestandteilen d - e, bzw. in der alternativen Ausführungsform d-f, in Wasser;

2) Sprühtrocknung der Mischung.

Alternativ kann die Trocknung der Mischung auch im Wirbelschichtverfahren oder mit anderen dem Fachmann auf dem Gebiet bekannten Methoden erfolgen.

Einschlägige Geräte für die Mischung und Sprühtrocknung sind dem Fachmann bekannt.

Auch dieses Verfahren ist Gegenstand der Erfindung.

Schließlich wurde gefunden, dass sich die erfindungsgemäßen Zusammensetzungen sehr gut zur Applikation der enthaltenen agrochemischen Wirkstoffe auf Pflanzen und/oder deren Lebensraum eignen. Auch dieses Verfahren ist Gegenstand der Erfindung.

Die folgenden Beispiele illustrieren den Gegenstand der Erfindung ohne ihn zu limitieren.

Herstellung:

Durch Lösung des Wirkstoffes zusammen mit Alkalilauge und einem geeigneten Trocknungsverfahren lässt sich eine feste Formulierung mit einem sehr hohen Wirkstoffanteil herstellen (>50 %).

Verbindung I-2 wurde zusammen mit Kaliumhydroxid, einem Bindemittel und ggf. weiteren Zusatzstoffen in Mengen wie in Tab. 1 angegeben in Wasser unter Rühren gemischt und anschließend mittels Sprühtrocknung (LabPlant Model SprayDryer SD-05, Zulufttemperatur 190°C, Ablufttemperatur 50-60°C, Luftdurchsatz 48 $m^3/h$) getrocknet.

Tabelle 1

| Versuch Nr. | 1 | 2 | 3 | 4 | 5 | 6 | 7 | 8 | 9 | 10 | 11 | 12 | 12a | 13 | 14 | 15 |
|---|---|---|---|---|---|---|---|---|---|---|---|---|---|---|---|---|
| Kommentar | | | | | | | | | | | | | | Vergleichsbeispiele | | |
| I-2 /g | 135 | 311 | 311 | 10 | 186, 6 | 186, 6 | 140 | 135, 4 | 138, 2 | 57,4 | 57,4 | 56 | 66,5 | 10 | 72,2 | 66 |
| KOH (50%ig) /g | 41, 6 | 95, 8 | 94,1 | 2,5 | 57,5 | 57,5 | 32 | 37,5 | 34,2 | 15,5 | 16,4 | 15,5 | 20,8 | - | 13,4 | 18,3 |
| Reax 88B /g | 27 | 62, 2 | - | 2 | 31,3 | 17 | 10 | 9,7 | 9,9 | 10,1 | 10 | 11,5 | 9 | 2 | 5,2 | - |
| Reax 88A /g | - | - | 61,1 | - | - | - | - | - | - | - | - | - | - | - | - | - |
| $K_3PO_4$/ g | - | 31, 1 | 31,1 | 1 | 18,7 | 37,3 | 14 | 13,5 | 13,8 | - | - | - | - | 5,8 | 7,2 | - |
| Lactose/ g | - | - | - | - | - | - | - | - | - | 15 | 14,7 | - | - | - | - | - |
| $K_2SO_4$/ g | - | - | - | - | - | - | - | - | - | - | - | 15 | - | - | - | 14,2 |
| Morwet EFW /g | - | - | - | - | 6 | - | 4 | 3,9 | 3,9 | 2 | 1,5 | 2 | 2 | - | 2,1 | 1,5 |
| Silcolapse 426 R | | | | | | | | | | | | | 0,2 | | | |
| Schwefelsäure 25%ig | | | | | | | | | | | | | 1,5 | | | |
| Wasser /g | 250 | 632 | 632 | 20,1 | 380 | 380 | 260 | 253 | 257 | 131 | 130 | 130 | 108, 1 | 71,3 | - | - |
| Mol. Verhältnis A.I./KOH | 1:1 | 1:1 | 1: 0.9 | 1: 0.8 | 1:1 | 1:1 | 1: 0.75 | 1:0.9 | 1:0.8 | 1: 0.9 | 1:0.9 5 | 1: 0.9 | 1: 1 | 1:0 | 1: 0.6 | 1:0.9 |
| Lösungsgrad (5 % w/v Lösung)/ % | | | | | | | 99,9 | 100 | 99,9 | 99,7 | 99,2 | 99,9 | 99,9 | | 96,1 | 96,6 |
| Ergebnis | + | + | + | + | + | + | + | + | + | + | + | + | + | - | - | - |

Die Vergleichsbeispiele 13-15 zeigen, daß bei einem zu geringem Baseanteil sowie fehlendem Dispergierhilfsmittel keine ausreichende Löslichkeit erzielt werden kann.
Bestimmung der Löslichkeit und Lösegeschwindigkeit:

Bestimmung Lösungsgrad:

Formulierung und Wasser werden bei 25 °C in einen verschließbaren 250 mL Messzylinder gegeben, durch 15-maliges Umstülpen des verschlossenen Messzylinders gemischt und nach einer Standzeit von 5 Minuten durch ein 40 µm Sieb gegossen. Die Menge an Rückstand wird zur Bestimmung des Lösungsgrades ermittelt.
Zur Berechnung des prozentualen Rückstandes wird folgende Formel angewendet:

$$\text{Rückstand} = \frac{w_1 \cdot 100}{w_0}\ [\%]$$

dabei sind:

$w_1$ = Menge des Rückstands auf dem Sieb [g]
$w_0$ = Einwaage [g]
100 = Prozentfaktor [%]
Es wird der prozentuale Rückstände nach 5 Minuten (Rückstand[5min]) bestimmt.
Lösungsgrad = 100 - Rückstand[5min] [%]

Löslichkeit:

20 g der Zusammensetzung nach Beispiel 3 wurden in 50 g Wasser unter Rühren bei Raumtemperatur vollständig gelöst. Es entsteht ein tief-dunkel gefärbte, klare Lösung.

Lösegeschwindigkeit:

11.4 mg erfindungsgemäße Formulierung wurden unter Rühren in 200 mL Wasser bei verschiedenen Bedingungen (Wasserhärte & pH-Wert) gelöst und die Mischung wurde über 24 h optisch beurteilt. Gelöst bedeutet, dass es sich um eine klare Lösung handelte und kein ungelöster Feststoff mehr vorhanden gewesen ist.
Die Ergebnisse sind in Tabelle 2 dargestellt.

| | Beispiel | Medium | pH-Wert der Lösun g | Soll a.i. in 300 L $H_2O$ [g] | Einwaage Formulierung [mg] | Beurteilung des Löseverhaltens nach | | | | | |
|---|---|---|---|---|---|---|---|---|---|---|---|
| | | | | | | 0 min | 30 sec | 5 min | 30 min | 1 h | 24 h |
| A | 3 | 500 ppm $H_2O$ | 6,8 | 12 | 11.4 | nicht gelöst | gelöst | gelöst | gelöst | gelöst | gelöst |
| B | | Puffer 1 | 6,0 | 12 | 11.4 | nicht gelöst | gelöst | gelöst | gelöst | gelöst | gelöst |
| C | | Puffer 2 | 7,9 | 12 | 11.4 | nicht gelöst | gelöst | gelöst | gelöst | gelöst | gelöst |
| D | 2 | 500 ppm $H_2O$ | 7,5 | 12 | 11.4 | nicht gelöst | gelöst | gelöst | gelöst | gelöst | gelöst |
| E | | Puffer 1 | 6,0 | 12 | 11.4 | nicht gelöst | gelöst | gelöst | gelöst | gelöst | gelöst |
| F | | Puffer 2 | 7,9 | 12 | 11.4 | gelöst | gelöst | gelöst | gelöst | gelöst | gelöst |

(fortgesetzt)

| | Beispiel | Medium | pH-Wert der Lösun g | Soll a.i. in 300 L $H_2O$ [g] | Einwaage Formulierung [mg] | Beurteilung des Löseverhaltens nach | | | | | |
|---|---|---|---|---|---|---|---|---|---|---|---|
| | | | | | | 0 min | 30 sec | 5 min | 30 min | 1 h | 24 h |
| G | 2 | 500 ppm $H_2O$ | 7,6 | 24 | 22.9 | nicht gelöst | gelöst | gelöst | gelöst | gelöst | gelöst |
| H | | Puffer 1 | 6,0 | 24 | 22.9 | nicht gelöst | gelöst | gelöst | gelöst | gelöst | gelöst |
| I | | Puffer 2 | 8,0 | 24 | 22.9 | nicht | gelöst | gelöst | gelöst | gelöst | gelöst |

| | | | | | | | | | | | |
|---|---|---|---|---|---|---|---|---|---|---|---|
| | | | | | | gelöst | | | | | |
| J | 2 | 500 ppm $H_2O$ | 8,4 | 48 | 45.7 | nicht gelöst | gelöst | gelöst | gelöst | gelöst | gelöst |
| K | | Puffer 1 | 6,0 | 48 | 45.7 | nicht gelöst | gelöst | gelöst | gelöst | gelöst | gelöst |
| L | | Puffer 2 | 8,0 | 48 | 45.7 | nicht gelöst | nicht gelöst | gelöst | gelöst | gelöst | gelöst |

| | Beispiel | Medium | pH-Wert | Lösungsgrad (5 %w/v Lösung) [%] | Optische Beurteilung des Löseverhaltens nach 5 min |
|---|---|---|---|---|---|
| M | 12a | Wasser Cipac A | - | 99.9 | gelöst |
| N | | Wasser Cipac C | - | 99.8 | gelöst |
| O | | Wasser Cipac D | - | 99.7 | gelöst |
| P Q | | Puffer 3 | 4.7 | 99.6 | gelöst |
| | | Puffer 4 | 10 | 99.8 | gelöst |

Vergleich

| Nr. | Formulier typ | Lösung | pH-Wert der Lösung | Soll a.i. in 300 L $H_2O$ [g] | Einwaage Formulierung [g] | Beurteilung des Löseverhaltens nach | | | | | |
|---|---|---|---|---|---|---|---|---|---|---|---|
| | | | | | | 0 min | 30 sec | 5 min | 30 min | 1 h | 24 h |
| A | SL050 | 500 ppm $H_2O$ | 6,6 | 12 | 0,08 | gelöst | gelöst | gelöst | gelöst | gelöst | gelöst |
| B | | Puffer | 6,0 | 12 | 0,08 | gelöst | gelöst | gelöst | gelöst | gelöst | gelöst |
| C | | Puffer | 8,0 | 12 | 0,08 | gelöst | gelöst | gelöst | gelöst | gelöst | gelöst |

(fortgesetzt)

| Nr. | Formuliertyp | Lösung | pH-Wert der Lösung | Soll a.i. in 300 L $H_2O$ [g] | Einwaage Formulierung [g] | Beurteilung des Löseverhaltens nach | | | | | |
|---|---|---|---|---|---|---|---|---|---|---|---|
| | | | | | | 0 min | 30 sec | 5 min | 30 min | 1 h | 24 h |
| D | SC050 | 500 ppm $H_2O$ | 5,3 | 12 | 0,08 | nicht gelöst | nicht gelöst | nicht gelöst | nicht gelöst | nicht gelöst | nicht gelöst |
| E | | Puffer | 6,0 | 12 | 0,08 | nicht gelöst | nicht gelöst | nicht gelöst | nicht gelöst | nicht gelöst | nicht gelöst |
| F | | Puffer | 8,0 | 12 | 0,08 | nicht gelöst | gelöst | gelöst | gelöst | gelöst | gelöst |
| G | SL050 | 500 ppm $H_2O$ | 6,6 | 6 | 0,04 | gelöst | gelöst | gelöst | gelöst | gelöst | gelöst |
| H | | Puffer | 6,0 | 6 | 0,04 | gelöst | gelöst | gelöst | gelöst | gelöst | gelöst |
| I | | Puffer | 8,0 | 6 | 0,04 | gelöst | gelöst | gelöst | gelöst | gelöst | gelöst |
| J | SC050 | 500 ppm $H_2O$ | 5,4 | 6 | 0,04 | nicht gelöst | nicht gelöst | nicht gelöst | nicht gelöst | nicht gelöst | nicht gelöst |
| K | | Puffer | 6,0 | 6 | 0,04 | nicht gelöst | nicht gelöst | fast gelöst | fast gelöst | fast gelöst | fast gelöst |
| L | | Puffer | 8,0 | 6 | 0,04 | nicht gelöst | gelöst | gelöst | gelöst | gelöst | gelöst |

Wie sich aus den Vergleichsversuchen mit der SL und SC 050 Formulierung ergibt, löst sich die erfindungsgemäße Formulierung bei niedrigen pH-Wert (6) besser in Wasser als die SC Formulierung bei gleichem Wirkstoffgehalt. Außerdem können echte Lösungen mit höherem Wirkstoffgehalt erhalten werden (bis 48 g/ 300L).

Die SC Formulierungen wurden wie folgt hergestellt.

SC-Vergleichsformulierung:

Zur Herstellung eines Suspensionskonzentrates werden erst alle flüssigen Komponenten miteinander vermischt. Im nächsten Schritt werden die Feststoffe zugegeben und so lange gerührt, bis eine homogene Suspension entsteht. Die homogene Suspension wird zunächst einer Grob- und dann einer Feinmahlung unterworfen, so dass man eine Suspension enthält, in der 90% der Feststoffpartikel eine Teilchengröße unterhalb von 10 $\mu$m aufweisen. Anschließend fügt man unter Rühren bei Raumtemperatur Kelzan® S und Wasser hinzu zu Erreichung der vorgegebenen Viskosität. Es wird ein homogenes Suspensionskonzentrat erhalten. Eine typische Zusammensetzung einer weiteren SC-Formulierung ist:

49 g der Verbindung Formel I-2 (Wirkstoff)
15 g Soprophor® TS 54
45 g Atlox® 4913
100 g Glycerin (99%)
1 g Zitronensäure
1 g Silfoam® SRE
1,2 g Proxel® GXL
0,8 g Preventol® D7
1,2 g Kelzan® S
785,8 g Wasser

SL-Vergleichsformulierung:

Zur Herstellung der SL-Formulierung werden Wasser, der Wirkstoff (I-2) und Harnstoff vorgelegt. Man gibt 2 molare Natronlauge zu bis alles in Lösung geht und stellt anschließend mit 1 molarer Salzsäure auf pH 10 ein und füllt mit Wasser auf 1 L auf.

Eine typische Zusammensetzung einer SL-Formulierung war:

50 g der Verbindung Formel (Wirkstoff)
51,35 g Natronlauge (2 m)
51,35 g Salzsäure (1 m)
102,7 g Harnstoff
0,82 g Preventol® D 7
1,23 g Proxel® GXL 20%
1,03 g Silfoam® SRE
768,5 g Wasser

Biologische Wirksamkeit:

Im Gewächshaus wurde die biologische Aktivität von zwei SG Formulierungen (Beispiel 2, 3, 12a) im Vergleich zu einer SC 225 nach drench-Applikation gegen Myzus Persicae auf Paprika verglichen:

| | |
|---|---|
| Applikation: | Drench Volumen 50 ml, Bodenapplikation 7 Tage nach Pflanzung. |
| Rate: | 0,5; 1; 2 mg a.i./L Boden |
| Boden: | Standard BI Boden (pH 6,8) |
| Bodenfeuchte: | ~10 % w/w |
| Bodenvolumen: | 0,5 L Pott je Pflanze |
| Infestation: | 1 Woche nach Applikation |

Bei den verwendeten Aufwandmenge und unter den angegebenen Testbedingungen zeigten die erfindungsgemäßen Formulierungen sowie die SC vollständige Kontrolle von Myzus Persicae.

## Patentansprüche

1. Feste Zusammensetzung in Form wasserlöslicher Granulate (SG) enthaltend:

a. Tetramsäurederivaten der Formel (I)

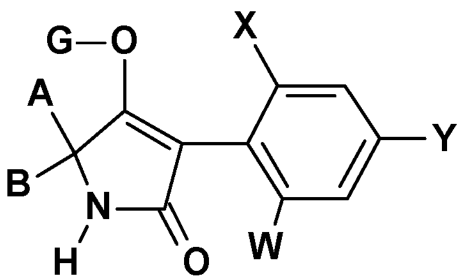

(I)

in welcher

W und Y unabhängig voneinander für Wasserstoff, C1-C4-Alkyl, Chlor, Brom, Jod oder Fluor stehen,
X für C1-C4-Alkyl, C1-C4-Alkoxy, Chlor, Brom oder Jod steht,
A, Bund das Kohlenstoffatom, an das sie gebunden sind, für C3-C6-Cycloalkyl stehen, welches durch eine gegebenenfalls durch C1-C4-Alkyl oder $C_1$-$C_4$-Alkoxy-$C_1$-$C_2$-alkyl-substituierte Alkylendioxyl-Gruppe substituiert ist, die mit dem Kohlenstoffatom, an das sie gebunden ist, ein 5-Ring- oder 6-Ringketal bildet,

G für Wasserstoff (a) oder für eine der Gruppen

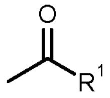 (b), 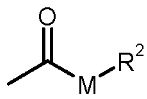 (c),

E (d) stehen, in welchen
E für ein Metallion oder ein Ammoniumion steht,
M für Sauerstoff oder Schwefel steht,
R1 für geradkettigtes oder verzweigtes C1-C6-Alkyl steht,
R2 für geradkettigtes oder verzweigtes C1-C6-Alkyl steht.

b. mindestens eine Base,
c. mindestens ein Dispergiermittel ausgewählt aus der Gruppe der Ligninsulfonate und deren Salzen,
d. optional mindestens ein Netzmittel,
e. optional mindestens einen wasserlöslicher Füllstoff, und
f. weitere wasserlösliche oder flüssige Wirkstoffe und Adjuvantien, wobei

Komponenten a - f enthalten sind in

a) 50-90 Gew.-%
b) 2-40 Gew.-%
c) 1-40 Gew.-%
d) 0-5 Gew.-%
e) 0-25 Gew.-%.
f) 0-10 Gew.-%,

**dadurch gekennzeichnet, dass** das molare Verhältnis von Wirkstoff zu Base (Komponente (a) zu (b)) im Bereich von 0,7 : 1,0 bis 1,0: 0,7, ist.

2. Zusammensetzung nach Anspruch 1, **dadurch gekennzeichnet, daß** Komponente b) ausgewählt ist aus der Gruppe, die Metall-Hydroxid-Basen umfaßt, weiter bevorzugt Alkalimetall-Hydroxide, noch weiter bevorzugt Alkalimetallhydroxide ausgewählt aus der Gruppe, die LiOH, NaOH und KOH umfaßt und besonders bevorzugt KOH, wobei Anteil der Base (Komponente b) in den erfindungsgemäßen Zusammensetzungen weiter bevorzugt 10 - 30 Gew.-%, bevorzugt 15 - 25 Gew.-% beträgt.

3. Zusammensetzung nach Anspruch 1, **dadurch gekennzeichnet, daß** der Anteil der Komponente c) in den erfindungsgemäßen Zusammensetzungen 3 - 15 Gew.-%, und besonders bevorzugt 8 - 12 Gew.-% beträgt.

4. Zusammensetzung nach einem der vorhergehenden Ansprüche enthaltend

a. Verbindungen der Formel (I)

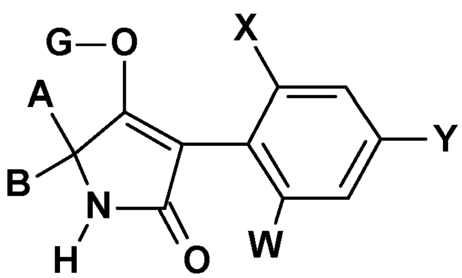

wobei die Verbindungen der Formel (I) folgende Definitionen haben:

W steht für Methyl,
X steht für Chlor oder Methyl,
Y steht für Chlor, Brom oder Methyl,

A, B und das Kohlenstoffatom, an das sie gebunden sind, stehen für gesättigtes C6-Cycloalkyl, welches mit einer Alkylendioxyl-Gruppe substituiert ist, die mit dem Kohlenstoffatom, an das sie gebunden ist, ein 5-Ring- oder 6-Ringketal bildet,
G steht für Wasserstoff (a) oder für eine der Gruppen E (d),

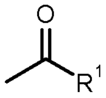 (b), 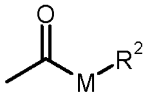 (c),

in welchen
M für Sauerstoff steht,
E für ein Metallionenäquivalent oder ein Ammoniumion steht,
$R^1$ für geradkettigtes oder verzweigtes $C_1$-$C_4$-Alkyl steht,
$R^2$ für geradkettigtes oder verzweigtes $C_1$-$C_4$-Alkyl steht.

b. mindestens eine Base (Komponente b) ausgewählt aus der Gruppe umfassend LiOH, KOH und NaOH,
c. mindestens ein basisches Dispergiermittel ausgewählt aus der Gruppe der Ligninsulfonate und deren Salzen,
d. mindestens ein Netzmittel, ausgewählt aus der Gruppe bestehend aus den Natriumsalzen alkylierter Naphthalinsulfonate wie, vorzugsweise ausgewählt aus der Gruppe besthend aus den Natriumsalzen der Dioctylsulfobernsteinsäure, und Blockpolymerisat von Propylenoxid und Ethylenoxid auf Ethylendiamin.
e. optional mindestens einen wasserlöslicher Füllstoff, und
f. weitere wasserlösliche oder flüssige Wirkstoffe und Adjuvantien.

**5.** Zusammensetzung nach einem der vorhergehenden Ansprüche enthaltend eine Verbindung der Formel (I) als a) ausgewählt aus folgenden Verbindungen

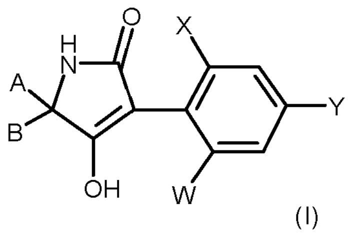

(I)

| W | X | Y | A | B |
|---|---|---|---|---|
| $CH_3$ | $CH_3$ | $CH_3$ | 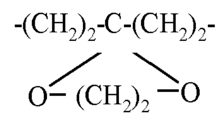 | |
| $CH_3$ | $CH_3$ | Cl | 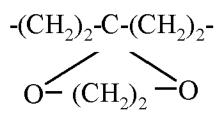 | |
| $CH_3$ | $CH_3$ | Br | 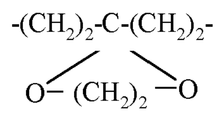 | |
| $CH_3$ | $CH_3$ | $CH_3$ | 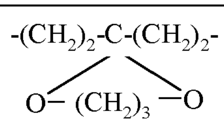 | |

(fortgesetzt)

| W | X | Y | A | B |
|---|---|---|---|---|
| $CH_3$ | $CH_3$ | Cl | | 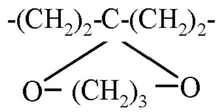 |
| $CH_3$ | $CH_3$ | Br | | 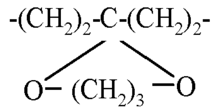 |

(I)

b. mindestens eine Base (Komponente b) ausgewählt aus der Gruppe umfassend KOH und NaOH,

c. mindestens ein Dispergiermittel ausgewählt aus der Gruppe der Ligninsulfonate und deren Salzen, ,

d. mindestens ein Netzmittel, ausgewählt aus der Gruppe bestehend aus den Natriumsalzen alkylierter Naphthalinsulfonate und den Natriumsalzen der Dioctylsulfobernsteinsäure,

e. optional mindestens einen wasserlöslicher Füllstoff, ausgewählt aus der Gruppe, die leicht lösliche anorganische Salze, Zucker und Harnstoffderivate umfaßt, und

f. weitere wasserlösliche oder flüssige Wirkstoffe und Adjuvantien.

**6.** Zusammensetzung nach einem oder mehreren der vorhergehenden Ansprüche enthaltend als

a. die Verbindung mit der Formel (I-2) mit folgender Struktur:

(I) 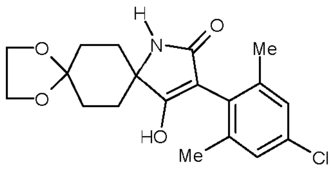 (I-2)

b. KOH als Base (Komponente b),

c. Dispergiermittel aus der Gruppe der Ligninsulfonate und deren Salzen,

d. ein Netzmittel, ausgewählt aus der Gruppe bestehend aus den Natriumsalzen alkylierter Naphthalinsulfonate,

e. optional einen wasserlöslicher Füllstoff, ausgewählt aus der Gruppe, die Zucker umfaßt, vorzugsweise Lactose und Maltodextrin, besonders bevorzugt Lactose,

f. weitere wasserlösliche oder flüssige Wirkstoffe und Adjuvantien.

**7.** Zusammensetzung nach einem oder mehreren der vorhergehenden Ansprüche enthaltend als

a. die Verbindung mit der Formel (I-2) mit folgender Struktur:

(I) 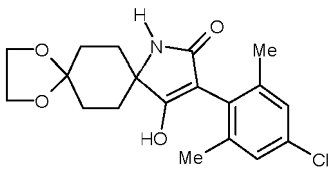 (I-2)

b. KOH als Base (Komponente b),

c. basisches Dispergiermittel aus der Gruppe der Ligninsulfonate,

d. ein Netzmittel, ausgewählt aus der Gruppe bestehend aus den Natriumsalzen alkylierter Naphthalinsulfonate, vorzugsweise ®Morwet EFW,

e. einen wasserlöslicher Füllstoff, ausgewählt aus der Gruppe, die Zucker umfaßt, vorzugsweise Lactose und

Maltodextrin, besonders bevorzugt Lactose,
f. optional weitere wasserlösliche oder flüssige Wirkstoffe und Adjuvantien.

**8.** Zusammensetzung nach einem oder mehreren der vorhergehenden Ansprüche, **dadurch gekennzeichnet, dass** das molare Verhältnis von Wirkstoff zu Base (Komponente (a) zu (b)) im Bereich von 1,0:1,0 bis 1,0:0,9 ist.

**9.** Zusammensetzung nach einem oder mehreren der vorhergehenden Ansprüche, **dadurch gekennzeichnet, dass** Komponenten a - f enthalten sind in

a) 55-85 Gew.-%
b) 10-30 Gew.-%
c) 3-15 Gew.-%
d) 1-3 Gew.-%
e) 0-25 Gew.-%.
f) 0-10 Gew.-%

**10.** Zusammensetzung nach einem oder mehreren der vorhergehenden Ansprüche, **dadurch gekennzeichnet, dass** Komponenten a - f enthalten sind in

a) 55-80 Gew.-%
b) 10-30 Gew.-%
c) 3-15 Gew.-%
d) 1-3 Gew.-%
e) 0-20 Gew.-%.
f) 0,1-8 Gew.-%

**11.** Verfahren zur Herstellung einer Zusammensetzung gemäß einem oder mehreren der vorhergehenden Ansprüche, **dadurch gekennzeichnet, dass** die Formulierung durch Mischen der Komponenten und anschließender Sprühtrocknung erfolgt.

**12.** Verwendung einer Zusammensetzung gemäß einem oder mehreren der Ansprüche 1 bis 11 zur Applikation der enthaltenen agrochemischen Wirkstoffe auf Pflanzen und/oder deren Lebensraum.

**13.** Mittel, **gekennzeichnet durch** einen Gehalt an einer Zusammensetzung gemäß einem oder mehreren der Ansprüche 1 bis 10.

**14.** Verwendung einer Zusammensetzung gemäß einem oder mehreren der Ansprüche 1 bis 11 zur Bekämpfung von Insekten.

**15.** Feste Zusammensetzung in Form Wasser-löslicher Granulate (SG) enthaltend:

a. die Verbindung mit der Formel (I-2) mit folgender Struktur:

(I)

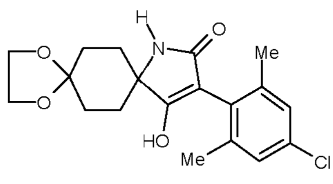

(I-2)

b. KOH als Base (Komponente b),
c. Dispergiermittel aus der Gruppe der Ligninsulfonate und deren Salzen,
d. ein Netzmittel, ausgewählt aus der Gruppe bestehend aus den Natriumsalzen alkylierter Naphthalinsulfonate,
e. optional einen wasserlöslicher Füllstoff, ausgewählt aus der Gruppe, die Zucker umfaßt, vorzugsweise Lactose und Maltodextrin, besonders bevorzugt Lactose,
f. weitere wasserlösliche oder flüssige Wirkstoffe und Adjuvantien.

wobei Komponenten a - f enthalten sind in

a) 55-85 Gew.-%
b) 10-30 Gew.-%
c) 3-15 Gew.-%
d) 1-3 Gew.-%
e) 0-25 Gew.-%.
f) 0-10 Gew.-%

## Claims

**1.** Solid composition in the form of water-soluble granules (SG) containing:

a. tetramic acid derivatives of formula (I)

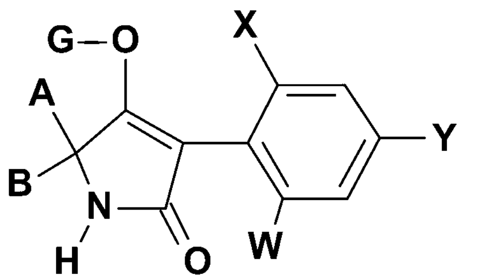

(I)

wherein

W and Y stand independently of one another for hydrogen, C1-C4-alkyl, chlorine, bromine, iodine or fluorine,

X stands for C1-C4-alkyl, C1-C4-alkoxy, chlorine, bromine or iodine,
A, B and the carbon atom to which they are bonded stand for C3-C6-cycloalkyl, which is substituted by an alkylene dioxyl group optionally substituted by C1-C4-alkyl or C1-C2-alkoxy-C1-C3-alkyl, which together with the carbon atom to which it is bonded forms a 5-membered or 6-membered ketal ring,
G stands for hydrogen (a) or for one of the groups E (d)

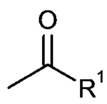 (b), 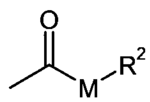 (c),

in which
E stands for a metal ion or an ammonium ion,
M stands for oxygen or sulfur,
R1 stands for straight-chain or branched C1-C6-alkyl,
R2 stands for straight-chain or branched C1-C6-alkyl.

b. at least one base,
c. at least one dispersant selected from the group of ligninsulfonates and salts thereof,
d. optionally at least one wetting agent,
e. optionally at least one water-soluble filler, and
f. further water-soluble or liquid active ingredients and adjuvants, wherein components a - f are contained in

a) 50-90% by weight
b) 2-40% by weight
c) 1-40% by weight
d) 0-5% by weight
e) 0-25% by weight.
f) 0-10% by weight,

**characterized in that** the molar ratio of active ingredient to base (component (a) to (b)) is in the range from 0.7 : 1.0 to 1.0 : 0.7.

**2.** Composition of claim 1, **characterized in that** component b) is selected from the group comprising metal hydroxide bases, more preferably alkali metal hydroxides, still more preferably alkali metal hydroxides selected from the group comprising LiOH, NaOH and KOH, and particularly preferably KOH, wherein the proportion of the base (component b) in the compositions according to the invention is more preferably 10 - 30% by weight, preferably 15 - 25% by weight.

**3.** Composition of claim 1, **characterized in that** the proportion of component c) in the compositions according to the invention is 3 - 15% by weight, and particularly preferably 8 - 12% by weight.

**4.** Composition according to one of the preceding claims containing

a. compounds of formula (I)

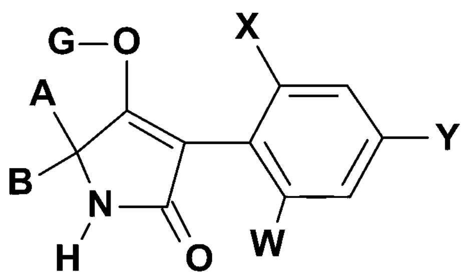

wherein the compounds of formula (I) have the following definitions:

W stands for methyl,
X stands for chlorine or methyl,
Y stands for chlorine, bromine or methyl,
A, B and the carbon atom to which they are bonded stand for saturated C6-cycloalkyl, which is substituted by an alkylene dioxyl group, which together with the carbon atom to which it is bonded forms a 5-membered or 6-membered ketal ring,
G stands for hydrogen (a) or for one of the groups E (d),

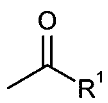 (b), 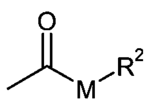 (c),

in which
M stands for oxygen,
E stands for a metal ion equivalent or an ammonium ion,
R1 stands for straight-chain or branched C1-C4-alkyl,
R2 stands for straight-chain or branched C1-C4-alkyl.

b. at least one base (component b) selected from the group comprising LiOH, KOH and NaOH,
c. at least one basic dispersant selected from the group of ligninsulfonates and salts thereof,
d. at least one wetting agent, selected from the group consisting of the sodium salts of alkylated naphthalenesulfonates, preferably selected from the group consisting of the sodium salts of dioctyl sulfosuccinic acid, and block polymerizate of propylene oxide and ethylene oxide on ethylenediamine.
e. optionally at least one water-soluble filler, and
f. further water-soluble or liquid active ingredients and adjuvants.

**5.** Composition according to one of the preceding claims containing a compound of formula (I) as a) selected from the following compounds

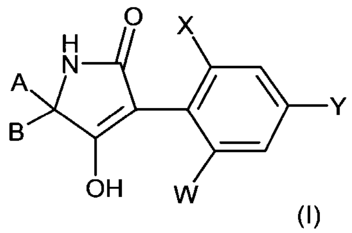

(I)

| W | X | Y | A | B |
|---|---|---|---|---|
| $CH_3$ | $CH_3$ | $CH_3$ | | 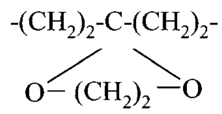 |
| $CH_3$ | $CH_3$ | Cl | | 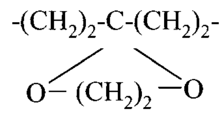 |
| $CH_3$ | $CH_3$ | Br | | 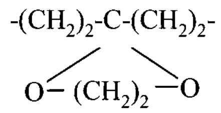 |
| $CH_3$ | $CH_3$ | $CH_3$ | | 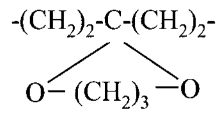 |
| $CH_3$ | $CH_3$ | Cl | | 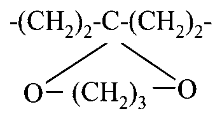 |
| $CH_3$ | $CH_3$ | Br | | 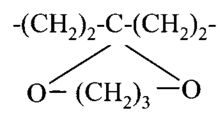 |

(I)

b. at least one base (component b) selected from the group comprising KOH and NaOH,
c. at least one dispersant selected from the group of ligninsulfonates and salts thereof,
d. at least one wetting agent, selected from the group consisting of the sodium salts of alkylated naphthalenesulfonates and the sodium salts of dioctyl sulfosuccinic acid,
e. optionally at least one water-soluble filler, selected from the group comprising readily soluble inorganic salts, sugars and urea derivatives, and
f. further water-soluble or liquid active ingredients and adjuvants.

**6.** Composition according to one or more of the preceding claims containing as

a. the compound of formula (I-2) having the following structure:

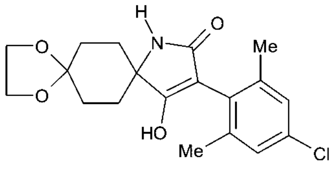 (I-2)

b. KOH as base (component b),
c. dispersant from the group of ligninsulfonates and salts thereof,
d. a wetting agent, selected from the group consisting of the sodium salts of alkylated naphthalenesulfonates,
e. optionally a water-soluble filler, selected from the group comprising sugars, preferably lactose and maltodextrin, particularly preferably lactose,
f. further water-soluble or liquid active ingredients and adjuvants.

**7.** Composition according to one or more of the preceding claims containing as

a. the compound of formula (I-2) having the following structure:

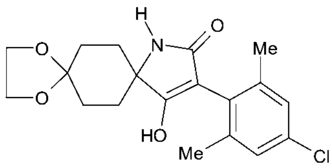 (I-2)

b. KOH as base (component b),
c. basic dispersant from the group of ligninsulfonates,
d. a wetting agent, selected from the group consisting of the sodium salts of alkylated naphthalenesulfonates, preferably ®Morwet EFW,
e. a water-soluble filler, selected from the group comprising sugars, preferably lactose and maltodextrin, particularly preferably lactose,
f. optionally further water-soluble or liquid active ingredients and adjuvants.

**8.** Composition according to one or more of the preceding claims, **characterized in that** the molar ratio of active ingredient to base (component (a) to (b)) is in the range from 1.0:1.0 to 1.0:0.9.

**9.** Composition according to one or more of the preceding claims, **characterized in that** components a - f are contained in

a) 55-85% by weight
b) 10-30% by weight
c) 3-15% by weight
d) 1-3% by weight
e) 0-25% by weight.
f) 0-10% by weight

**10.** Composition according to one or more of the preceding claims, **characterized in that** components a - f are contained in

a) 55-80% by weight
b) 10-30% by weight
c) 3-15% by weight
d) 1-3% by weight
e) 0-20% by weight.
f) 0.1-8% by weight

**11.** Process for preparing a composition according to one or more of the preceding claims, **characterized in that** the formulation is prepared by mixing the components and subsequently spray-drying.

**12.** Use of a composition according to one or more of claims 1 to 11 for applying the agrochemical active ingredients contained therein to plants and/or their habitat.

**13.** Agent, **characterized by** containing a composition according to one or more of claims 1 to 10.

**14.** Use of a composition according to one or more of claims 1 to 11 for controlling insects.

**15.** Solid composition in the form of water-soluble granules (SG) containing:

a. the compound of formula (I-2) having the following structure:

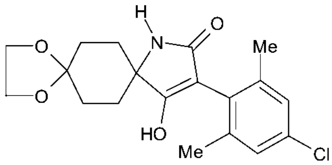
(I-2)

b. KOH as base (component b),
c. dispersant from the group of ligninsulfonates and salts thereof,
d. a wetting agent, selected from the group consisting of the sodium salts of alkylated naphthalenesulfonates,
e. optionally a water-soluble filler, selected from the group comprising sugars, preferably lactose and maltodextrin, particularly preferably lactose,
f. further water-soluble or liquid active ingredients and adjuvants.

wherein components a - f are contained in

a) 55-85% by weight
b) 10-30% by weight
c) 3-15% by weight
d) 1-3% by weight
e) 0-25% by weight.
f) 0-10% by weight

**Revendications**

**1.** Composition solide sous forme de granulés hydrosolubles (SG) contenant :

a. des dérivés de l'acide tétramique de formule (I)

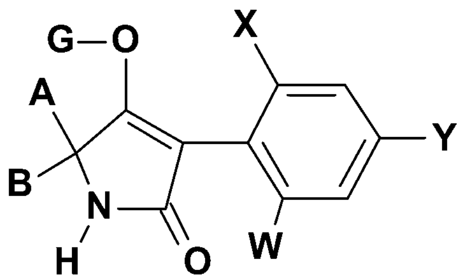
(I)

dans laquelle
W et Y représentent, indépendamment l'un de l'autre, l'hydrogène, un C1-C4-alkyle, le chlore, le brome, l'iode ou le fluor,

X représente un C1-C4-alkyle, un C1-C4-alcoxy, le chlore, le brome ou l'iode,
A, B et l'atome de carbone auquel ils sont liés représentent un C3-C6-cycloalkyle substitué par un groupe

alkylènedioxyle éventuellement substitué par C1-C4-alkyle ou $C_1$-$C_4$-alcoxy-$C_1$-$C_2$-alkyle, lequel forme avec l'atome de carbone auquel il est lié un cétal à 5 ou 6 chaînons,
G représente l'hydrogène (a) ou l'un des groupes E (d),

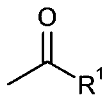 (b), 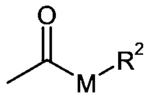 (c),

dans lesquels
E représente un ion métallique ou un ion ammonium,
M représente l'oxygène ou le soufre,
R1 représente un C1-C6-alkyle linéaire ou ramifié,
R2 représente un C1-C6-alkyle linéaire ou ramifié.

b. au moins une base,
c. au moins un dispersant sélectionné parmi le groupe des lignosulfonates et de leurs sels,
d. éventuellement au moins un agent mouillant,
e. éventuellement au moins une charge hydrosoluble, et
f. d'autres substances actives et adjuvants hydrosolubles ou liquides, dans lesquels les composants a - f sont contenus à raison de

a) 50-90 % en poids
b) 2-40 % en poids
c) 1-40 % en poids
d) 0-5 % en poids
e) 0-25 % en poids.
f) 0-10 % en poids,

**caractérisée en ce que** le rapport molaire de substance active à base (composant (a) à (b)) est dans la plage de 0,7 : 1,0 à 1,0 : 0,7.

**2.** Composition selon la revendication 1, **caractérisée en ce que** le composant b) est sélectionné parmi le groupe qui comprend des bases hydroxyde métalliques, plus préférablement des hydroxydes de métaux alcalins, encore plus préférablement des hydroxydes de métaux alcalins sélectionnés parmi le groupe qui comprend LiOH, NaOH et KOH, et particulièrement préférablement KOH, la teneur en base (composant b) dans les compositions selon l'invention étant plus préférablement de 10 à 30 % en poids, préférablement de 15 à 25 % en poids.

**3.** Composition selon la revendication 1, **caractérisée en ce que** la teneur du composant c) dans les compositions selon l'invention est de 3 à 15 % en poids, et particulièrement préférablement de 8 à 12 % en poids.

**4.** Composition selon l'une des revendications précédentes contenant

a. des composés de formule (I)

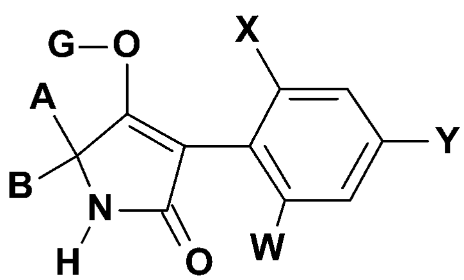

dans laquelle les composés de formule (I) ont les définitions suivantes :

W représente le méthyle,
X représente le chlore ou le méthyle,

Y représente le chlore, le brome ou le méthyle,
A, B et l'atome de carbone auquel ils sont liés représentent un C6-cycloalkyle saturé substitué par un groupe alkylènedioxyle qui forme avec l'atome de carbone auquel il est lié un cétal à 5 ou 6 chaînons,
G représente l'hydrogène (a) ou l'un des groupes

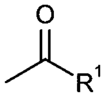 (b), 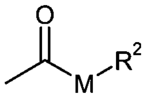 (c),

E (d),
dans lesquels
M représente l'oxygène,
E représente un équivalent d'ion métallique ou un ion ammonium,
R1 représente un C1-C4-alkyle linéaire ou ramifié,
R2 représente un C1-C4-alkyle linéaire ou ramifié.

b. au moins une base (composant b) sélectionnée parmi le groupe comprenant LiOH, KOH et NaOH,
c. au moins un dispersant basique sélectionné parmi le groupe des lignosulfonates et de leurs sels,
d. au moins un agent mouillant, sélectionné parmi le groupe consistant en les sels de sodium de naphtalènesulfonates alkylés, de préférence sélectionné parmi le groupe consistant en les sels de sodium de l'acide dioctylsulfosuccinique, et le copolymère bloc d'oxyde de propylène et d'oxyde d'éthylène sur éthylènediamine.
e. éventuellement au moins une charge hydrosoluble, et
f. d'autres substances actives et adjuvants hydrosolubles ou liquides.

**5.** Composition selon l'une des revendications précédentes contenant un composé de formule (I) comme a) sélectionné parmi les composés suivants

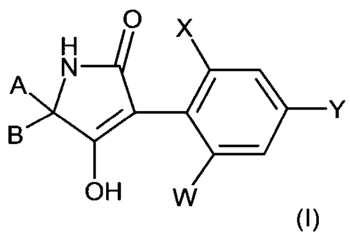

(I)

| W | X | Y | A | B |
|---|---|---|---|---|
| $CH_3$ | $CH_3$ | $CH_3$ | 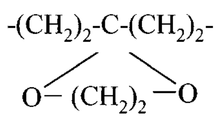 | |
| $CH_3$ | $CH_3$ | Cl | 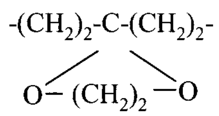 | |
| $CH_3$ | $CH_3$ | Br | 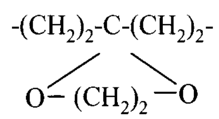 | |
| $CH_3$ | $CH_3$ | $CH_3$ | 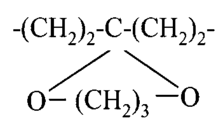 | |

(fortgesetzt)

| W | X | Y | A | B |
|---|---|---|---|---|
| $CH_3$ | $CH_3$ | Cl | 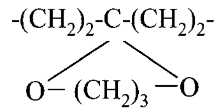 | |
| $CH_3$ | $CH_3$ | Br | 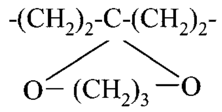 | |

(I)

b. au moins une base (composant b) sélectionnée parmi le groupe comprenant KOH et NaOH,
c. au moins un dispersant sélectionné parmi le groupe des lignosulfonates et de leurs sels,
d. au moins un agent mouillant, sélectionné parmi le groupe consistant en les sels de sodium de naphtalènesulfonates alkylés et les sels de sodium de l'acide dioctylsulfosuccinique,
e. éventuellement au moins une charge hydrosoluble, sélectionnée parmi le groupe qui comprend les sels inorganiques facilement solubles, les sucres et les dérivés de l'urée, et
f. d'autres substances actives et adjuvants hydrosolubles ou liquides.

**6.** Composition selon une ou plusieurs des revendications précédentes contenant comme

a. le composé de formule (I-2) ayant la structure suivante :

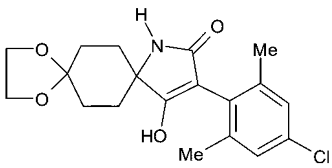
(I-2)

b. KOH comme base (composant b),
c. dispersant sélectionné parmi le groupe des lignosulfonates et de leurs sels,
d. un agent mouillant, sélectionné parmi le groupe consistant en les sels de sodium de naphtalènesulfonates alkylés,
e. éventuellement une charge hydrosoluble, sélectionnée parmi le groupe qui comprend les sucres, de préférence le lactose et la maltodextrine, particulièrement préférablement le lactose,
f. d'autres substances actives et adjuvants hydrosolubles ou liquides.

**7.** Composition selon une ou plusieurs des revendications précédentes contenant comme

a. le composé de formule (I-2) ayant la structure suivante :

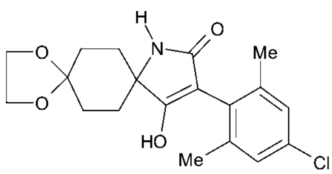
(I-2)

b. KOH comme base (composant b),
c. dispersant basique sélectionné parmi le groupe des lignosulfonates,
d. un agent mouillant, sélectionné parmi le groupe consistant en les sels de sodium de naphtalènesulfonates alkylés, de préférence ®Morwet EFW,
e. une charge hydrosoluble, sélectionnée parmi le groupe qui comprend les sucres, de préférence le lactose et la

maltodextrine, particulièrement préférablement le lactose,
f. éventuellement d'autres substances actives et adjuvants hydrosolubles ou liquides.

**8.** Composition selon une ou plusieurs des revendications précédentes, **caractérisée en ce que** le rapport molaire de substance active à base (composant (a) à (b)) est dans la plage de 1,0:1,0 à 1,0:0,9.

**9.** Composition selon une ou plusieurs des revendications précédentes, **caractérisée en ce que** les composants a - f sont contenus à raison de

a) 55-85 % en poids
b) 10-30 % en poids
c) 3-15 % en poids
d) 1-3 % en poids
e) 0-25 % en poids.
f) 0-10 % en poids

**10.** Composition selon une ou plusieurs des revendications précédentes, **caractérisée en ce que** les composants a - f sont contenus à raison de

a) 55-80 % en poids
b) 10-30 % en poids
c) 3-15 % en poids
d) 1-3 % en poids
e) 0-20 % en poids.
f) 0,1-8 % en poids

**11.** Procédé de préparation d'une composition selon une ou plusieurs des revendications précédentes, **caractérisé en ce que** la formulation est réalisée par mélange des composants et séchage par pulvérisation subséquent.

**12.** Utilisation d'une composition selon une ou plusieurs des revendications 1 à 11 pour l'application des substances actives agrochimiques contenues sur les plantes et/ou leur habitat.

**13.** Agent, **caractérisé par** une teneur en une composition selon une ou plusieurs des revendications 1 à 10.

**14.** Utilisation d'une composition selon une ou plusieurs des revendications 1 à 11 pour la lutte contre les insectes.

**15.** Composition solide sous forme de granulés hydrosolubles (SG) contenant :

a. le composé de formule (I-2) ayant la structure suivante :

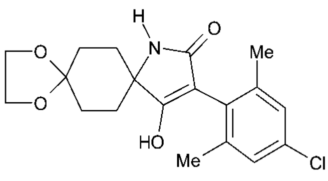
(I-2)

b. KOH comme base (composant b),
c. dispersant sélectionné parmi le groupe des lignosulfonates et de leurs sels,
d. un agent mouillant, sélectionné parmi le groupe consistant en les sels de sodium de naphtalènesulfonates alkylés,
e. éventuellement une charge hydrosoluble, sélectionnée parmi le groupe qui comprend les sucres, de préférence le lactose et la maltodextrine, particulièrement préférablement le lactose,
f. d'autres substances actives et adjuvants hydrosolubles ou liquides.

dans lesquels les composants a - f sont contenus à raison de

a) 55-85 % en poids

b) 10-30 % en poids
c) 3-15 % en poids
d) 1-3 % en poids
e) 0-25 % en poids.
f) 0-10 % en poids

FIGUR 1:

**Fig. 1: Röntgenbeugungsmuster von I-2 (Mod. A)**

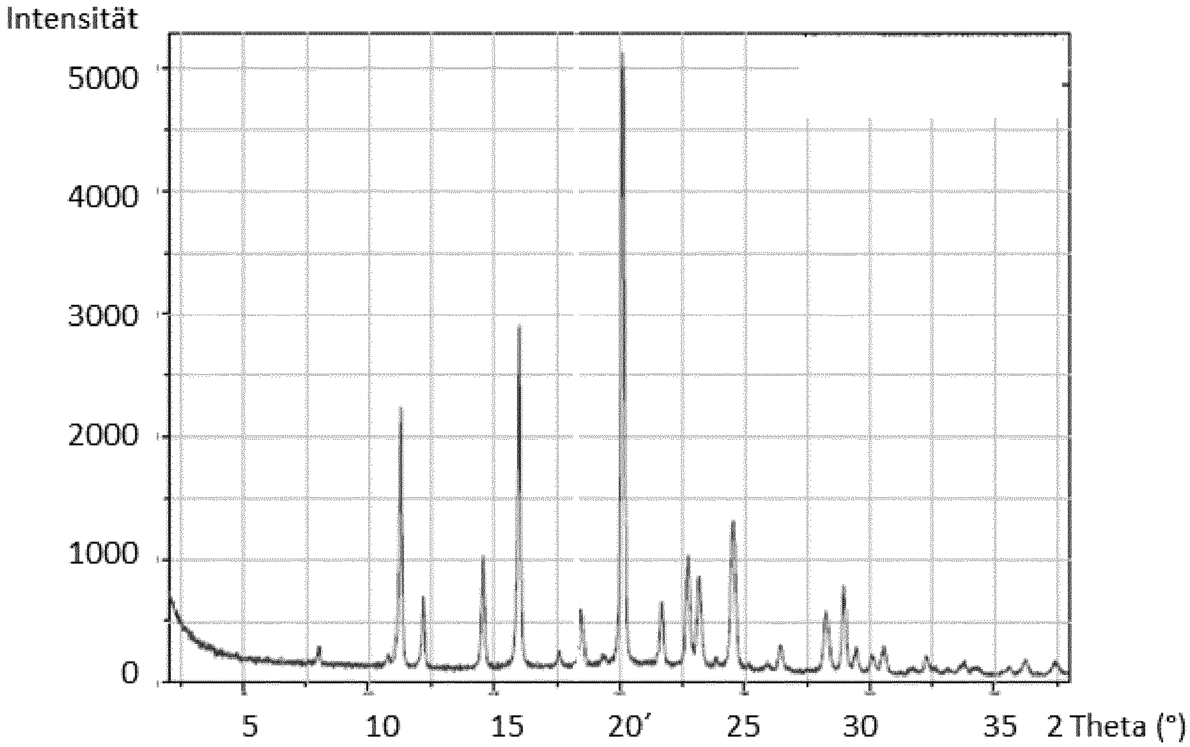

FIGUR 2 :

FIG. 2: IR-Spektrum

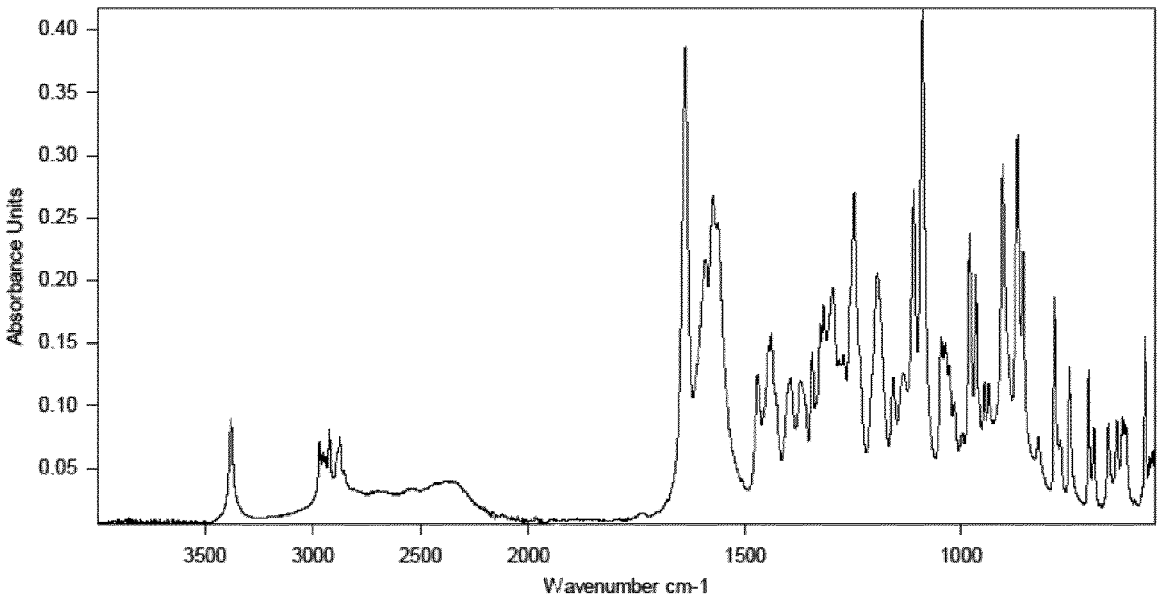

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009115262 A
- WO 2013159731 A1
- EP 1377163 A2
- WO 2009086739 A1


### In der Beschreibung aufgeführte Nicht-Patentliteratur


- *CHEMICAL ABSTRACTS*, 68512-34-5
- *CHEMICAL ABSTRACTS*, 26264-58-4